# EUROPEAN PATENT APPLICATION

(11) **EP 1 292 050 A1**
(43) Date of publication of application: **12.03.2003**
(21) Application number: 02256098.1
(22) Date of filing: 03.09.2002
(51) Int. Cl.: H04B 7/204

(54) **Dark beam operation scenario**

(30) Priority: 06.09.2001 US 317560 P; 26.06.2002 US 183838
(71) Applicant: Hughes Electronics Corporation, El Segundo, California 90245-0956 (US)
(72) Inventor: Noerpel, Anthony, Lovettsville, Virginia 20180 (US); Zhao, Wei, Germantown, Maryland 20874 (US); Verma, Sandeep, Punjabi Bagh, New Delhi Pin 110026 (IN); Quinn, Mark, Gaithersburg, Maryland 20882 (US); Hudson, Van, Columbia, Maryland 21004 (US); Saha, Abheek, New Delhi Pin 110-017 (IN)
(74) Representative: Jackson, Richard Eric

(57) **Abstract**

A system and method is presented for the illumination of a dark beam when a new access terminal enters into the spot beam, and requests, through an existing gateway, the new service of a new gateway. New messages and system information elements and methods for using them are described to facilitate the illumination of the dark beam, the darkening of an illuminated beam, and situations when incomplete requests are received and when a dark beam cannot be illuminated.

## Description

This application claims benefit under 35 U.S.C. §119(e) from provisional patent application Serial No. 60/317,560, filed on September 6, 2001, the entire contents of which are incorporated herein by reference.

### Field of the Invention

The present invention relates to cellular and satellite communications. More particularly, the invention relates to a method and system of sharing radio resources between at least one existing service provider and a second existing or new service provider, to provide both new and existing services to their respective users.

### Background of the Invention

Great advances in the field of wireless communications have been made over the past ten to twenty years, and continue to be made. These advances both improve the quality of communication, e.g., the clarity and reliability of communication, and improve the geographic coverage of such wireless communications. As industry strives to provide a wireless communications capability that covers the entire globe, factors such as economic viability dictate that space-based transceivers be employed to compliment ground infrastructure. Ground infrastructure remains technologically advantageous and economically preferable in identified population centers where a great deal of bandwidth is required in a relatively small area. However, satellites can provide universal coverage economically extending coverage over less populated areas. Thus, two types of wireless communication, i.e., ground infrastructure cellular, and space-based satellite systems have emerged. One of the most ubiquitous terrestrial cellular systems is the Global System for Mobile Communications (GSM). Geo Mobile Radio (GMR-1) is an example of systems which are extensions of GSM to the mobile satellite communication system venue.

In both types wireless communication systems, there are physical channels and logical channels. A physical channel in GSM or GMR-1 is a continuous allocation of resources including both a frequency and a time component. The frequency is given by an absolute radio frequency channel number (ARFCN) allocation, and the time component is given by the allocated time slot(s) within a frame. Logical channels are mapped to physical channels. Logical air interface channels of interest include: broadcast control channel (BCCH) 5 (from network to a user access terminal or forward direction); random access channel (RACH) 19 (from user access terminal to network or return direction); and access grant channel (AGCH) 21 (forward direction). The network uses logical channels to convey signaling and control message. For example, system information messages are conveyed on the BCCH 5, channel request messages are conveyed on the RACH 19 and immediate assignment reject and immediate assignment messages are conveyed on the AGCH 21. Messages contain information elements and information elements can have many different values.

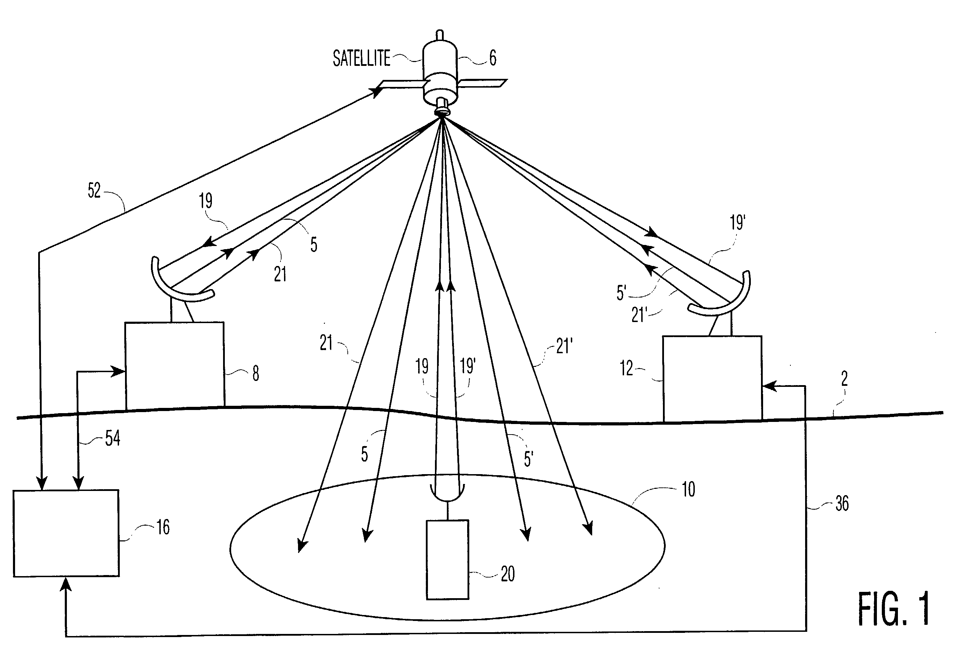

FIG. 1 illustrates a block diagram of a satellite communication system according to the prior art. A satellite communications network, such as a geo-synchronous earth orbit mobile communications network, comprises at least one geo-synchronous earth orbit satellite 6, a ground-based resource manager (RM) 16 and spacecraft operations center (SOC), associated with satellite 6, at least one ground-based existing gateway station (EGW) 8, and at least one user access terminal 20, which is typically a hand-held or vehicle mounted mobile telephone. Satellite 6 enables access terminal 20 to communicate with other access terminals 20 or with other telephones in a terrestrial network (for example, a public switched telephone network or PSTN), via the gateway stations. RM 16 provides system-wide resource management, and the SOC controls on-orbit satellite operations for its respective satellite 6. A system may comprise one or more satellites 6.

In a terrestrial cellular system an antenna's coverage area (both receive and transmit) is known as a cell. The equivalent concept in a mobile satellite system is a spot beam. The spot beam is defined as the coverage area of a satellite antenna or antenna subsystem, which may consist of a phased array or a multiplicity of antenna elements with or without a reflector. The typical mobile satellite may have hundreds of spot beams. A "cell" or "spot beam" is defined to exist independent of whether or not it is actually radiating or receiving energy at the time. Thus, we can define an illuminated spot beam as a beam into which energy is actually being radiated by the antenna and a dark spot beam as a beam in which the satellite's antenna is not radiating any energy or a signal. More specifically, the transmission of BCCH 5 into the cell or spot beam is required.

The spot beam in FIG. 1 shall be referred to as spot beam 10. BCCH 5 contains the system information necessary for access terminal 20 to receive so that it can be aware of the cell or spot beam's 10 existence. In GSM cellular technology specifications an access terminal is referred to as a "mobile station" (MS). In the GMR-1 mobile satellite specifications an access terminal is referred to as a "mobile earth station" (MES). For generality, the term "access terminal" 20 will be used in this document

The system information messages broadcast by the network on the BCCH 5 contain the information necessary for access terminal 20 (as shown in FIG. 1) to determine where the RACH 19 and AGCH 21 channels are (timeslots and ARFCNs) and any rules governing the use of the RACH 19 channel by access terminal 20. In GSM and GMR-1, RACH 19 channels and AGCH 21 channels are paired so that an access terminal's channel request message on a specific RACH 19 will always be responded to by an immediate assignment or immediate assignment reject message from the network on the specific paired AGCH 21. The system information messages broadcast on the BCCH 5 channel also contain information elements which describe the service provider bearer services which are offered to access terminal 20 within the spot beam or cell. A GMR-1 BCCH 5 also contains a concurrent BCCH list, which is a list of BCCHs 5 being broadcast into the same spot beam 10 by the network and their services and service providers. Except for the concurrent BCCH list, all of this information or its equivalent exists in GSM. All of the information which the terminal needs to know in order to operate within the system is contained in the system information messages.

GMR-1 05.005 and GSM 05.05 partition the radio frequency spectrum available to the air interface into radio frequency channels, and defines an ARFCN for each channel. Each spot beam in GMR-1 (or cell in GSM) is allocated a subset of these channels. These channels process are defined as the beam allocation. One radio frequency channel of the beam allocation is used by the network to broadcast the BCCH and is known as the BCCH carrier.

GSM and GMR-1 use time division multiplexing (TDMA). Time is partitioned into TDMA frames and timeslots as defined in GMR-1 05.002 and GSM 05.02. The transmissions within these timeslots are known as bursts. A burst is a single unit of transmission on the radio path defined in terms of center frequency (or ARFCN), bandwidth, power profile, and duration (in numbers of contiguous timeslots).

Logical channels are mapped to physical channels by a set of multiplexing rules. They can be statically or dynamically mapped to physical channels. These rules are defined in GSM 05.02 for GSM and GMR-1 05.002 for GMR-1.

At present, the typical mobile communications satellites are non-processing satellites or bent-pipe satellites. That means that all physical bursts are transmitted or originated by a ground-based transmitter, either an access terminal 20, EGW 8 or new gateway (NGW) 12, and these are received and retransmitted by the satellite. Satellite 6 does not initiate transmission or originate physical bursts. Typically, there is a radio frequency spectrum allocated to the link between access terminal 20 and satellite 6 and another radio frequency spectrum allocated to the feeder link between satellite 6 and EGW 8. If EGW 8 transmits a burst on the feeder link, satellite 6 receives the burst and performs a frequency translation from the feeder link frequency to an appropriately allocated ARFCN and retransmits the burst on the forward link ARFCN into spot beam 10. If no feeder link burst is present satellite 6 has no signal to retransmit. Also, if access terminal 20 transmits a burst on an appropriately allocated ARFCN return link, satellite 6 receives the burst and performs a frequency translation to the appropriately allocated feeder link frequency and retransmits the burst from access terminal's 20 signal to EGW 8.

When an access terminal 20 is turned on or powered up it searches for a BCCH 5 broadcast in a spot beam 10. Since there can be hundreds of spot beams 10, the access terminal 20 must perform a task called spot beam selection. Spot beam selection in GMR-1 is described in GMR-1 specifications 03.022 and 05.008 and in U.S. Patent 6,233,451, "SPOT BEAM SELECTION IN A MOBILE SATELLITE COMMUNICATION SYSTEM", (the entire contents of which are expressly incorporated herein by reference). Spot beam selection is the selecting of a BCCH carrier to "camp-on", which combines comparison and selection based on received signal strengths of BCCH carriers with a comparison and selection based on service provider or PLMN identity. Briefly, In GSM, access terminal 20 measures the power in all the BCCH carriers and selects all the ones with received signal strengths greater than some criteria and creates a rank-ordered list. The access terminal 20 then reads the system information broadcast on the BCCHs 5 of the BCCH carriers in the rank-ordered list and selects the one, which has a preferred service provider or PLMN. This is often not the closest cell or the strongest signal.

In GMR-1, in order to conserve satellite power and access terminal 20 power during communications, it is important that the access terminal 20 always select the correct spot beam. To assist the access terminal 20, two lists are broadcast in the system information of each BCCH 5, the neighbor list and the concurrent BCCH list. The neighbor list is a list of BCCH carriers used in the adjoining spot beams 10. The access terminal 20 makes measurements of these neighbors for signal strength comparison. The concurrent BCCH list is a list of all BCCH carriers in the same spot beam. These may be from a different EGW 8 or NGW 12. The concurrent BCCH List includes the PLMN ID, which is the service provider identity of the operator of the system broadcasting the concurrent BCCH. The PLMN ID is referred to as the "public land mobile network identifier" and it is composed of a mobile country code (MCC), and a mobile network code (MNC). The access terminal 20 avoids measurement comparison of concurrent BCCH carriers to make a spot beam selection, however once the access terminal 20 selects a spot beam 10, it compares PLMN identities of each BCCH 5 on the concurrent list and "camps-on" the BCCH carrier with a preferred PLMN.

As a further innovation of GMR-1, the access terminal 20 has incorporated a Global Positioning System (GPS) receiver. The system information message in the BCCH 5 also contains the latitude and longitude of the spot beam 10 center. Access terminal 20 may optionally compare its GPS position to the spot beam center position to accurately determine the correct spot beam. Since access terminal 20 is required to report this position in the channel request message, the network may optionally redirect the access terminal 20 to a different spot beam 10 based on a comparison of the reported access terminal 20 position and the coverage area map of all spot beams 10.

In order to support ubiquitous service throughout the satellite's coverage area, a gateway (EGW 8 or NGW 12) must broadcast a BCCH (BCCH 5 and BCCH 5', respectively) into every existing spot beam 10. This means that the RM 16 must allocate at least one BCCH 5 carrier for each spot beam 10 for use by the gateway RM 16. Further, satellite power must be allocated for each spot beam 10 to be illuminated by the gateway with a BCCH 5 (or BCCH 5^{')} transmission.

Having selected a spot beam 10 and a BCCH carrier, the access terminal 20 must transmit a channel request message on the RACH 19 (or RACH 19) channel to request a traffic channel for communication of user data and/or signaling. Prior to transmitting this message, however, the access terminal 20 must make one more check. It must read the cell-bar-access bit in the system information to determine if access terminals are barred from attempting access to the cell or spot beam. If this bit is '1' access is barred and if the bit is '0' access is permitted. In the case assess is permitted, the access terminal 20 would request a channel with the establishment cause "to register". The definition of the cell bar access bit is shown in Table 1. If the user subsequently wanted to make a phone call, the access terminal 20 would request a channel for that purpose with establishment cause "to originate a call". Alternatively, someone in the PSTN might call the user, in which case, having registered with the network, the network knows the location, cell or spot beam and can page the access terminal. Upon receiving a page, the access terminal 20 transmits a channel request message with establishment cause "responding to a page." Other establishment causes exist.

**TABLE I**

| Cell Bar Access | Any Service |
|---|---|
| 1 | Barred |
| 0 | Not Barred |

In the prior art of GSM and other cellular and mobile satellite systems, the channel request message typically only contains a random reference and an establishment cause. A random reference is a unique random number generated by access terminal 20 and passed to the gateway within the RACH message, and which uniquely identifies that access terminal 20. It is used by the gateway to address access terminal 20 when sending the immediate assignment or immediate assignment reject message to access terminal 20 on the AGCH 21 (or AGCH 21). This is used in the event of contention, between a first and second (or any number of) access terminals 20. As we have seen, the establishment cause tells the gateway the reason the access terminal 20 is requesting a channel (i.e., the reason to "establish" a channel). An innovation, introduced in the prior art of GMR-1, is for the channel request message to contain much more detailed information about the establishment cause and the requesting access terminal 20. The GMR-1 channel request message contains, in addition to the establishment cause and random reference, the SP/HPLMN ID (Service Provider / Home Public Land Mobile Network), the called party number, the GPS-derived position of the access terminal 20 and other information elements. The network reads all of these information elements and determines the disposition of the channel request message from access terminal 20. Any of the values of these information elements may trigger existing gateway (EGW) 8 to process access terminal's 20 request for access in a specific way, such as setting up a terminal-to-terminal call (described in GMR-1 specification 03.096) or optimally routing the call to another EGW 8 (described in GMR-1 specification 03.097) or rejecting the call based on geographic location, (described in GMR-1 specification 03.099) etc. None of these services are offered in GSM and there is no comparable specification.

U.S. Patent No. 6,249,677, (the entire contents of which are herein expressly incorporated by reference), is entitled "Apparatus and Method for Delivering Key Information of a Channel Request Message From a User Terminal to a Network" and discloses an apparatus and method, for use with the satellite-based communications network, for improving the reliability and speed at which communication between a user terminal and the network is established. The apparatus and method arranges data of a channel request message transmitted from a user terminal to a satellite in the satellite-based network to insure that the most critical data for establishing communication between the user terminal and the satellite-based network is received at the satellite during the appropriate receiving time frame window. The channel request message includes a first data group necessary for establishing a communication link for which information is transmitted between the apparatus and the network, and a second data group including information for decreasing the amount time necessary to establish the communication link. The first data group is positioned at the center of the Channel Request Message, with portions of the second data group at opposite ends of the Channel Request Message. The time at which the user terminal transmits the Channel Request Message is set based on a location of the apparatus within a spot beam, to take into account the appropriate propagation delay time for the message to travel from the apparatus to the satellite in the network, thus assuring that at least the first data group of the Channel Request Message is received at the satellite during an appropriate receiving time frame window.

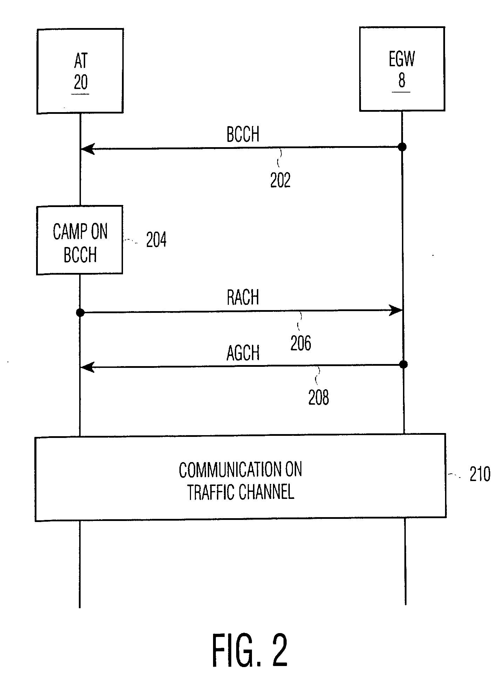

FIG. 2 illustrates a message flow diagram showing the establishment of a communications channel between an access terminal and the network according to the prior art. As discussed above, EGW 8 continuously transmits BCCH 5 (step 202), which contains system information messages. In step 204, access terminal 20 "camps on" BCCH 5, and retrieves the critical system information. Included in this system information is the frequency identity of the RACH 19 channel which access terminal 20 may use to communicate with EGW 8. For example, access terminal may transmit a channel request message to EGW 8 in order to access existing services. Upon receiving the channel request message from the access terminal 20 on the RACH 19 (step 206) the network responds with either an immediate assignment or an immediate assignment reject message on the AGCH 21 (step 204). Communication on a traffic channel may then begin, as shown in step 210.

As described, in order to offer wireless mobile service, a network or system must advertise its presence and capabilities via system information messages broadcast on the BCCH 5. This broadcast costs resources to a service provider. These resources include spectrum, power as well as radio equipment. When there are two gateway stations serving the same spot beam 10, each gateway stations must use an RF carrier as the BCCH carrier and each gateway station must broadcast the BCCH 5 continuously, in order for the access terminal 20 to discover and read the system information on the BCCH 5 and access services (step 210) from the gateway. Both gateways must illuminate their BCCH carriers.

A new service provider or the existing service provider, launching a new service, is normally required to spend resources to broadcast the system information associated with the new service. In order to support ubiquitous service in the entire coverage area of the satellite system, by the prior art, the NGW 12 must broadcast a BCCH 5 in every spot beam. This requires the allocation of at least one BCCH carrier for every spot beam 10, an allocation of satellite power for every spot beam 10, and the allocation of other required system resources, such as transmitters sufficient to support the transmission of a BCCH 5 in every spot beam 10 by NGW 12. Accordingly, a need arises to allow an existing service provider, which is already providing ubiquitous service, to support by proxy a second service provider and/or a new service. Such as capability offers the opportunity to save system resources. However, a method is required, which minimizes the impact to the existing proxy network, and at the same time requires no modifications to the user access terminal 20 already using the proxy network for existing services, and minimal modifications to a new access terminal 20 and existing gateway station equipment.

### Summary of the Invention

The above described disadvantages are overcome and a number of advantages are realized by the present invention which relates to a system and method to facilitate providing a new service by a new service provider to existing or new user access terminal; wherein the existing gateway may trigger the providing of these new services upon receiving a specific request from the user terminal containing specific information, such as the user terminal's establishment cause, SP/HPLMN ID or even its GPS position.

One embodiment of the invention comprises a method of enabling communication between a user of an existing service provider and a new service provider, which comprises the steps of recognizing a dark beam illumination triggering event, determining whether the user can be serviced by the new service provider, providing resources from an existing resource provider if the user can be serviced by the new service provider, or denying resources from the existing resource provider if the user cannot be serviced by the new service provider, and providing the new service from the new service, provider to the user when the resources have been provided by the existing service provider.

An additional embodiment of the invention comprises a system for enabling communication between user of an existing service provider and a new service provider, which comprises a satellite, an access terminal, the access terminal adapted to communicate with the satellite, an existing gateway, the existing gateway adapted to communicate with the access terminal, a new gateway, a resource manager and the satellite, and the system further adapted to facilitate providing new services between the access terminal and the new gateway.

It is therefore object of the invention to provide a system and method to facilitate providing a new service to new user access terminal of both established and new service providers.

It is a further object of the invention to provide and system and method whereby two gateway stations, an existing one, EGW, and an new one, NGW, perhaps cooperate in order to conserve system resources, such as satellite power yet allow NGW to provide service in the entire coverage area of EGW through the satellite.

It is a further object of the invention to provide a system and method to efficiently provide access for new user access terminal to new services without requiring the new service provider to dedicate its own satellite transmission resources in any spot beam.

It is therefore an object of the invention to provide a system and method to automatically trigger the illumination of a dark beam based on specific values of information elements contained in a channel request message, transmitted by a user.

It is therefore an additional object of the invention to provide a system and method to deactivate and de-illuminate an illuminated beam based on specific criteria.

It is therefore an additional object of the invention to provide a system and method to reject a request by a user to illuminate a dark beam.

It is therefore an additional object of the invention to provide a system and method to accommodate a plurality unsuccessful requests for illumination of a dark beam by a user within system limitations in order to illuminate a dark beam if possible.

It is therefore an additional object of the invention to provide a system and method to provide a mechanism for enabling successful illumination of a dark beam by a user, by way of an extended pause timer and an illumination retry timer.

It is therefore an additional object of the invention to provide a system and method to use an existing anchored broadcast control channel as a proxy for a temporary broadcast control channel.

It is therefore an additional object of the invention to provide a system and method that provides an interface between an existing gateway and a new gateway.

It is therefore an additional object of the invention to provide a system and method to provide an additional mechanism, a cell bar access flag, for use in the illumination of a dark beam by a user.

It is therefore an additional object of the invention to achieve beam illumination and darkening in such a way as to not require any modification to existing terminals which do not need access to the new service or gateway.

It is therefore an additional object to the invention to achieve beam illumination and darkening in such a way as to impose minimum modification on the existing gateway, specifically that the existing gateway may remain "stateless" in regard to the beam darkening and beam illumination protocol and procedure.

### Brief Description of the Drawings

The novel features believed characteristic of the invention are set forth in the appended claims. The invention itself, however, as well as other features and advantages thereof will be best understood by reference to the detailed description of the specific embodiments which follows, when read in conjunction with the accompanying drawings, in which:
FIG. 1 illustrates a block diagram of a satellite communication system according to the prior art;
FIG. 2 illustrates a message flow diagram showing the establishment of a communications channel between an access terminal and the network according to the prior art;
FIGS. 3 and 4 illustrate block diagrams of the operational environments within which a method and system according to an embodiment of the invention can operate;
FIG. 5 illustrates a block diagram of a shared resource satellite communication system which can employ a system and method according to an embodiment of the invention;
FIG. 6 is a signal flow diagram illustrating a method for an access terminal to successfully request illumination of a dark beam according to an embodiment of the invention;
FIG. 7 is a signal flow diagram illustrating a method whereby an access terminal in idle mode discovers the illumination of a dark beam by the network according to an embodiment of the invention;
FIG. 8 is a signal flow diagram illustrating a method for rejecting a request to illuminate a dark beam according to another embodiment of the invention;
FIG. 9 is a signal flow diagram illustrating a method for darkening an illuminated dark beam according to a further embodiment invention; and
FIG. 10 is a signal flow diagram illustrating a method employed by an access terminal for repeatedly attempting to communicate with an existing gateway according to yet another embodiment of the invention.

### Detailed Description of the Preferred Embodiment

The various features of the invention will now be described with reference to the figures, in which like parts are identified with the same reference characters.

The following detailed description of the preferred embodiment is related to two co-pending applications: "A MOBILITY MANAGEMENT-RADIO RESOURCE LAYER INTERFACE SYSTEM AND METHOD FOR HANDLING DARK BEAM SCENARIOS", A. Noerpel, et al., Serial No. , and "A MOBILITY MANAGEMENT STATE TRANSITION SYSTEM AND METHOD FOR HANDLING DARK BEAM SCENARIOS", A. Noerpel, et al., Serial No. , the entire contents of both being expressly incorporated herein by reference.

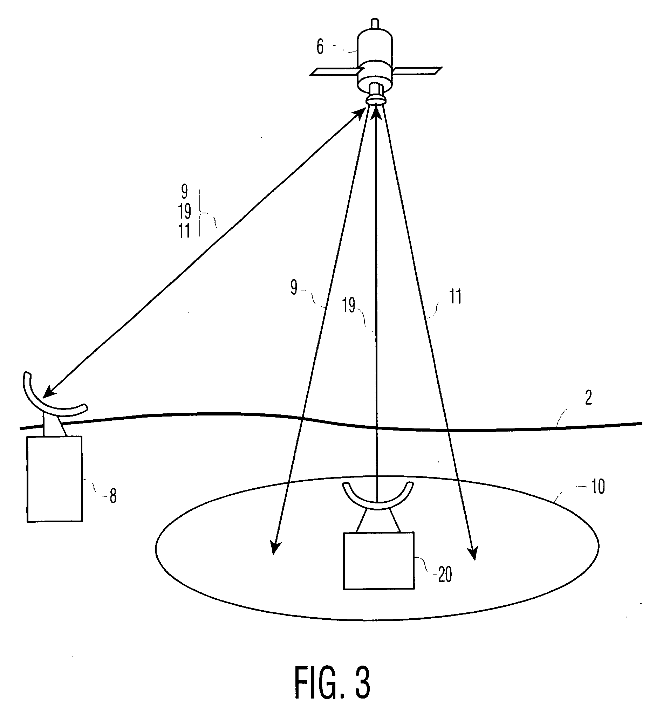

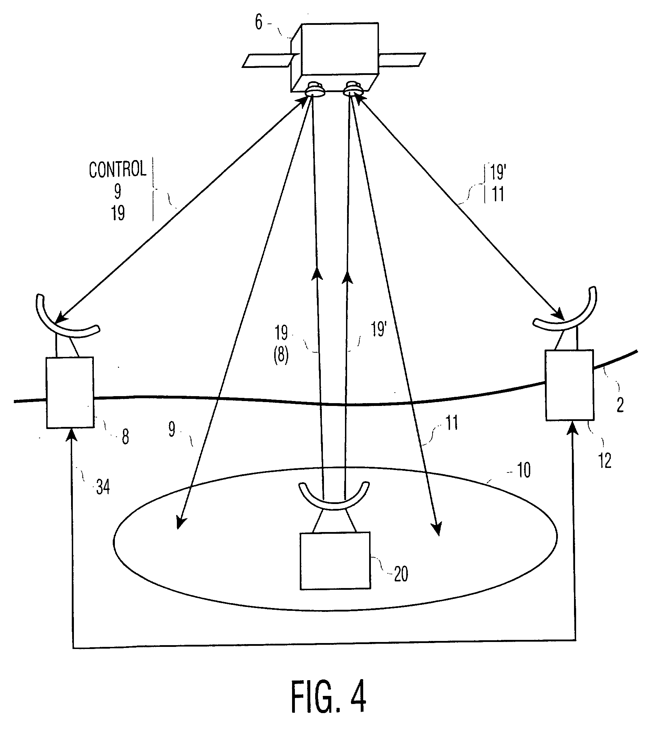

FIGS. 3 and 4 illustrate block diagrams of the operational environments within which a method and system according to an embodiment of the invention can operate. In general, the method and system of the invention can be applied to the situation where EGW 8 intends to provides a new service, but without allocating permanent resource for the new service in a given cell, as shown in FIG. 3. In FIG. 3, arrow 9 represents access to an existing service to spot beam 10. The existing service may be, for example, cellular telephone service. Arrow 11 represents access to a new service to spot beam 10. The new service may be, for example, wireless packet data service or access to a wireless internet (although the invention is not limited to this case). The new service may or may not be available to all users associated with EGW 8. Satellite 6 may also represent a cell phone tower (with transceivers), or any other means of transmitting/receiving information.

The system and method of the invention also applies to the situation where the new service is provided by a new gateway (NGW) 12, and the transmission resource is existing satellite 6. This is shown in FIG. 4. In FIG. 4, NGW 12 would, for example, rent or lease a percentage of the resources of the satellite 6 system including satellite power and spectrum.

In addition, the system and method of the present invention applies to the situation, which is a subset of the situation of FIG. 4 (but not shown in FIG. 4), where two (or more) satellite's, 6A, 6B are used. In addition, the method and system can be applied to both satellite and terrestrial cellular operation environments. In the case of a satellite environment, the two networks can either share the same satellite or use separate satellites. In this event, the method and system is employed in a network architecture as shown in FIG. 4, as will be discussed in more detail.

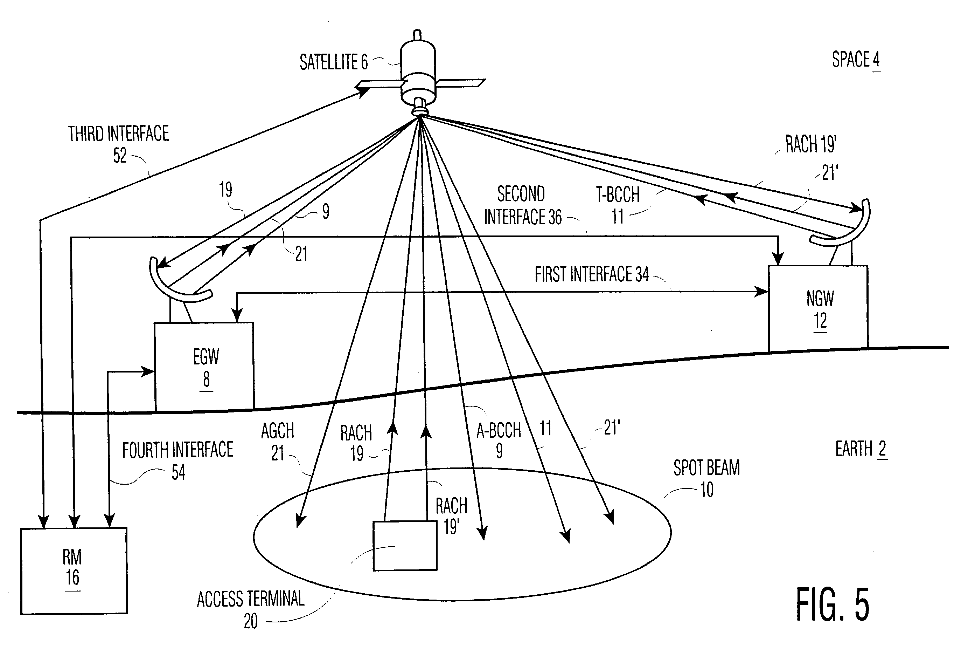

FIG. 5 illustrates a block diagram of a shared resource satellite communication system, which can employ a method and system according to an embodiment of the invention. The system and method of the invention can be generalized to any wireless radio system. In FIG. 5, there is shown satellite 6, which is in a geo-synchronous orbit in space 4, around earth 2.

First interface 34, shown in FIG. 5, is used by EGW 8 and NGW 12. First interface 34 can be supported on any wired or wireless link. It is a means of relaying information between EGW 8 and NGW 12. A second interface 36 is a means of relaying information between NGW 12 and RM 16. Fourth interface 54 provides a communication path between RM 16 and EGW 8.

The following paragraphs describe briefly and generally an example of a first embodiment of the invention, with regard to FIG. 5, in which a user of NGW 12 utilizes EGW 8 to access services of NGW 12.

In the prior art, spot beams or cells have two characterizations. The first is existence (or "existing spotbeam"); that is, the spot beam or cell always exists. The second characteristic is illumination. In order to describe the invention a third characteristic is introduced. If resources are allocated to the spot beam 10 or cell including radio frequency spectrum, satellite switched hardware such as filters, and gateway radio equipment such as a transmitter and receiver, the spot beam is said to be activated. If the gateway radio is transmitting system information messages on the BCCH 5 the activated spot beam 10 is said to be illuminated. A "darkbeam" is one that has existence, and may be is activated, but is not illuminated. A deactivated beam is one that is not only dark, but has no resources allocated to it. It will, of course, still be in existence.

The distinction is important for a mobile satellite system. An existing spot beam 10 does not use any resources, if spot beam is deactivated. By alternating which spot beams 10 are activated and which spot beams 10 are deactivated, resources such as frequency allocations and radio equipment may be shared. If an activated cell or spot beam 10 is not illuminated then resources such as satellite power may be saved or shared. Satellite power is limited and any technique that saves satellite power is vital. Further, darkening spot beams 10 may reduce intra-system interference in a frequency reuse system like cellular telephony or mobile satellite into cells or spot beams, which reuse either the same frequency or adjacent frequencies in neighboring spot beams or cells.

The present invention introduces a new type of BCCH: The BCCH 5 in the prior art is renamed as anchor BCCH (A-BCCH) 9. An A-BCCH 9 is always illuminated as is the case for BCCH 5 in the prior art. The new type of BCCH used in the system and method of the present invention is a temporary BCCH(T-BCCH)11. A T-BCCH 11 may be darkened and deactivated. A-BCCH 9 is always transmitted from EGW 8 via satellite 6, into spot beam 10, and has the following properties:
1) It shall use an Absolute Radio Frequency Channel Number (ARFCN) (frequency) on the BCCH-Full List for that satellite (A BCCH-Full List is a list of the subset of carrier frequencies used for BCCH transmission by a satellite on all the spot beams within the coverage area.);
2) It shall always be illuminated in a satellite system;
3) It shall always be transmitted at the full (calibrated) BCCH power;
4) It may be listed on a Neighbor BCCH list (A Neighbor BCCH List is a list of BCCH frequencies used by the system in neighboring spot beams. See U.S. Patent No. 6,233,451, the contents of which are hereby expressly incorporated by reference); and
5) It may be used for relative signal strength indication-based (measurement-based) spot beam selection.

A T-BCCH 11 is temporarily transmitted from NGW 12 via satellite 6, into spot beam 10.

T-BCCH 11 may be illuminated independent of any action on the part of access terminal 20, or in response to a request from access terminal 20 and has the following properties:
1) It may use any frequency which has been allocated for use in the satellite system including those ARFCN not on the BCCH Full List for that satellite,
2) It may not always be illuminated or activated.
3) It may not be transmitted at full BCCH power and its power lever may not be calibrated;
4) It shall not be listed in neighbor lists. ; and
5) It shall not be used by the access terminal 20 for measurement-based spot beam selection, since its effective isotropic radiated power (EIRP) is not guaranteed and because of its temporary nature.

It is through the system and method of the present invention that an A-BCCH 9, which is always broadcast by an EGW 8 into spot beam 10, acts as a proxy for a concurrent T-BCCH 11, which is only occasionally broadcast by NGW 12, when needed for service, into spot beam 10.

As with the prior art, an access terminal 20, when it is powered up, must perform spot beam selection. However, unlike the prior art, an access terminal's 20 relative received signal strength measurements must be restricted to A-BCCH carriers and should exclude T-BCCH carriers. The methods of the prior art of GMR-1 can be used to encourage this access terminal 20 behavior without modification to the access terminal itself. First, we restrict neighbor lists to neighboring A-BCCHs 9. Thus access terminals 20, will naturally look for and measure these BCCH carriers. Second, we use frequencies on the BCCH full list for A-BCCHs 9 and these frequencies will always be the first frequencies, which the access terminal 20 scans for a BCCH carrier. Third, T-BCCHs 11 are broadcast at lower power level so that even if an access terminal 20 discovers one during the measurement process, it will always be of lower power than some A-BCCH 9. The access terminal 20 will then tend to eliminate any T-BCCH 11 from the rank ordered list of available BCCH, during the measurement process. Thus, existing access terminal 20 does not require modification to adapt to the introduction of NGW 12 and it's T-BCCHs 11.

Recall that to facilitate the access terminal's 20 spot beam selection process, EGW 8 must broadcasts an anchored BCCH (A-BCCH) 9 in every spot beam 10 in the entire coverage area.

The prior art of GMR-1 benefits the introduction of dark beams in another way. By the existing spot beam selection process, the access terminal 20 is not likely to discover a T-BCCH 11, which may be illuminated in spot beam 10 and which may be appropriate for that terminal, i.e., a new access terminal 20 needing access to the packet data service of NGW 12. The concurrent BCCH list is a list of all concurrent BCCHs, which are being broadcast into spot beam 10. In the prior art, these would all be other A-BCCH 9, since the prior art does not include the concept of a T-BCCH 11 or a dark beam. The present invention adapts the concurrent BCCH list to include even T-BCCHs 11 being broadcast within the same spot beam 10, but only when they are illuminated. They should be removed from the list when they are dark. This creates the need for first interface 34 between the EGW 8 and the NGW 12. First interface 34 and the new signaling which it supports, enables the NGW 12 to update the EGW 8 as to the status of the T-BCCH 11, including whether it is dark or illuminated, its ARFCN and the SP/PLMN identity of NGW 12.

The present invention uses first interface 34 in another important way. If an access terminal 20 requires service from NGW 12 in a dark beam, spot beam 10, for example, it can only request service from EGW 8, since it is the only gateway which is broadcasting a BCCH into spot beam 10. EGW 8 forwards all access terminal 20 service requests via first interface 34 to NGW 12. This new protocol, to be described, is how NGW 12 learns about the need of access terminals 20 for dark beam illumination.

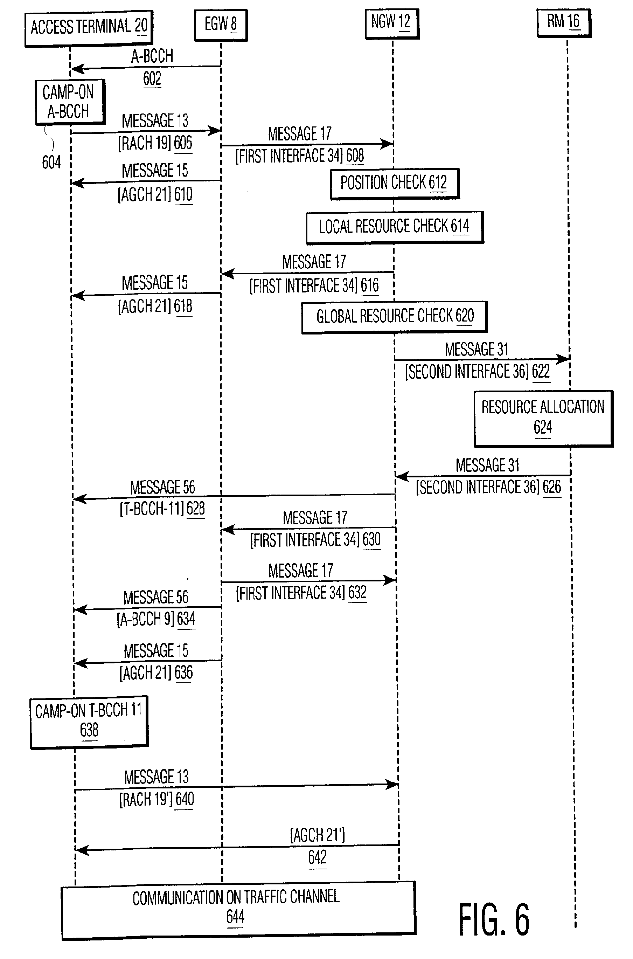

FIG. 6 is a signal flow diagram illustrating a method for an access terminal to successfully request illumination of a dark beam according to an embodiment of the invention. FIG. 6 is a signal flow diagram illustrating a method whereby an access terminal 20 can request service from NWG 12 using the resources of EGW 8. Thus NGW 12 can be triggered by access terminal 20 to illuminate a dark beam according to an embodiment of the present invention. The method of FIG. 6 illustrates the successful illumination of a dark beam at the request of an access terminal 20. The method begins when an access terminal 20 is powered up a dark beam and triggers the beam illumination process, and ends when it successfully begins data packet service as shown in step 646 of FIG. 6.

By the methods of the prior art, as described above, the access terminal 20 performs spot beam selection and selects the A-BCCH 9 being broadcast by EGW 8 into spot beam 10 as shown in step 602. In step 604, the access terminal 20 camps on the A-BCCH 9 and reads the system information broadcast by EGW 8. The access terminal 20 reads the concurrent BCCH list and determines, in this example, that there is no T-BCCH 11 listed for NGW 12, since the beam is dark. Before transmitting the channel request message, access terminal 20 must read all the system information including the rules for use and the physical channels which lave been allocated for RACH 19 channel. As described in the prior art, this includes the cell bar access bit. As a refinement over the prior art, the present invention introduces a new information element call the cell bar access extension bit. The interpretation, of these two bits, together, is shown in Table 2.

The cell bar access bit is used to indicate that circuit switched - only (CS-only) access terminals 20 are prohibited from accessing the network. The cell bar extension bit is used in combination with the cell bar access bit to indicate whether packet switched-only (PS-only) user access terminals 20 are prohibited from accessing the network.

There are several circumstances when the cell bar access bit and the cell bar access extension bit may be set to barred. The first is case of overloading or congestion in a channel or network equipment, then either or both of the two bits (dependent upon the circumstances) will be set to "barred". This prevents access terminals from attempting to access the network, thereby exacerbating the congested condition. The second is the situation in which non-cooperating gateways, whose A-BCCHs 9 do not act as proxies for concurrent T-BCCHs 11, are encountered by an access terminal 20. The coding of these bits, together, allows implementation of dark beam procedures in such as way as to be "backward compatible" to non cooperating gateways, which have not been modified to support the cell bar access extension bit, and to legacy access terminals 20, which have not been modified to read the new cell bar access extension bit. Table 2, shown below, illustrates the logical relationship between these bits and the meaning for circuit-switched-only access terminals and packet-switched-only access terminals.

**TABLE 2**

| Cell Bar Access | Cell Bar Extension | Terminal type | |
|---|---|---|---|
| | | CS | PS |
| 1 | 0 | Barred | Barred |
| 0 | 0 | Not Barred | Not Barred |
| 1 | 1 | Barred | Not Barred |
| 0 | 1 | Not Barred | Barred |

After reading the system information on the A-BCCH Access terminal 20 then transmits a channel request message 13 on a RACH 19 channel to EGW 8, in step 606. In the present embodiment of the invention, two new establishment cause information element 44 values are introduced: packet service request value 43 and attach/routing area update request value 45. The former value is used by the access terminal 20 to request packet data service on a packet data traffic channel. The latter value is used by the access terminal 20 to request a signaling channel to perform an mobility management function such as to register, or attach, to the network or update an existing registration, update the routing area in which the terminal is registered.

In step 606, EGW 8 receives the channel request message 13 and evaluates the information contained therein. Based on this information, the EGW 8 determines whether or not it can provide service to the access terminal 20 or whether or not it should forward the request to NGW 12. In the present embodiment of the invention, the EGW 8 would decide to forward the channel request message to NGW 12 if the establishment cause contained one of the two new values described above. The scope of the invention, however, is not limited to these two values of the establishment cause nor to just this information element. The EGW 8 may also evaluate any other information element contained in the channel request message such as GPS position, called party number or SP/HPLMN ID to determine to forward the message to NGW 12.

Further elaboration regarding the decision making process by EGW 8 to illuminate the dark beam is necessary. As mentioned above, EGW 8 may decide, by evaluation of the channel request message received from access terminal 20, to begin the dark beam illumination process. This decision may be made based on any establishment cause value, or combination of establishment cause values included in the channel request message. The decision to illuminate may be based on any single information element or combination of information elements in the received channel request message, or combination of information elements and establishment cause values. It may, as one skilled in the art would know, be even based on multiple channel request messages, received from one or more access terminals 20, whether or not the user of the access terminal specifically requested a new service provided by NGW 12. It may also be based on any combination of information received from an access terminal with information received elsewhere. In short, the algorithm upon which the decision to illuminate a dark beam is extremely flexible, and may incorporate messages transmitted from an access terminal that are not specifically referenced as channel request messages.

Additionally, one skilled in the art will recognize that the decision to illuminate a dark beam may be based on factors that are either somewhat related to, or completely unrelated to, any access terminal, and any channel request message it may or may not transmit. For example, and one skilled in the art will recognize that these examples are not intended to limit the scope of the present invention, EGW 8 might decide to illuminate the dark beam because of the time of day, the number of access terminals in a particular spot beam 10, the amount of requests it receives to illuminate the dark beam (perhaps within a specific period of time), amount of time since the last request was received by EGW 8, availability of resources, position of the access terminal, type of service begin requested, or any other of a multitude of criteria.

In step 608, EGW 8 forwards the channel request message 13, received from the access terminal transparently NGW 12 and forgets about it. That is, EGW 8 is stateless with respect to the channel request. Thus there is no memory impact on EGW 8. EGW 8 also informs to NGW 12 the identity of the spot beam 10 and the RACH channel ARFCN upon which the channel request message 13 was received.

In step 610, EGW 8 responds to the access terminal with an immediate assignment reject message on the AGCH channel to indicate to the access terminal 20 that it's channel request message is being processed. This terminates access terminal's 20 RACH procedure. Since, the time it might take for NGW 12 to evaluate the channel request message, in turn, is indeterminate to the EGW 8, the EGW 8 includes a "pause timer" in the immediate assignment reject message indicating to the terminal not to attempt further access until this timer has expired. The order of steps 608 and 610 are not critical to the system and method of the present invention.

The immediate assignment reject message also contains a reject cause information element. This information element has five defined reject cause values which are relevant to the present invention. These are dark beam activation in progress, switch to new BCCH, lack of resources, non-availability of service and incorrect class-2 RACH info. These reject cause values are used to inform access terminal 20 the reason a channel request message 13 was rejected by NGW 12.

If EGW 8 forwards the channel request message 13 to NGW 12, it will use dark beam activation in progress and include a value for the pause timer. If EGW 8 determines that dark beam activation is impossible for lack of resources, it uses that reject value and includes a dark beam activation timer value. Access terminal 20 must not attempt to access the system through spot beam 10 and EGW 8 until this timer expires.

If EGW 8 is a non-cooperating gateway or if it knows the requested service is not available for some other reason, it responds with non-availability of service value in the reject cause message. If T-BCCH 11 is illuminated already, EGW 8 responds with the reject cause value switch to new BCCH and includes the ARFCN of the T-BCCH 11, to which the access terminal 20 is being redirected.

Finally, if channel request message 13 was received with errors, EGW 8 might respond with the reject cause value incorrect class-2 RACH info. In this case the immediate assignment reject message contains helpful information including a timing correction and a frequency correction. Access terminal 20, in this case, shall apply the indicated corrections to its time base and its frequency source and retransmit the channel request message.

In step 612, NGW 12 performs a position check based on the GPS position of access terminal 20 reported in channel request message 13 transmitted by access terminal 20 in step 603, and the spot beam ID of spot beam 10 in which EGW 8 received channel request message 13 from access terminal 20. If access terminal 20 is not within the geographical boundaries of spot beam 10, NGW 12 might redirect access terminal 20 to a new spot beam 10, provided one is illuminated. It is possible access terminal 20 is within a national boundary of a country with which NGW 12 does not have a service agreement and with which it cannot do business. In this case, NGW 12 might reject the channel request with reject cause invalid position. Unsuccessful cases will be discussed later.

In step 614, NGW 12 performs a local resource check to determine if it has resources to illuminate the beam based on any algorithm or criteria. That is, NGW 12 determines whether it has sufficient resource capability to enable communications with access terminal 20 and a resource provider. If there are sufficient resources, the method of FIG. 6 continues.

In step 616, NGW 12 sends an immediate assignment reject message, with cause dark beam activation in progress, to EGW 8 via first interface 34. In step 618, EGW 8 forwards the immediate assignment reject message to access terminal 20. This message contains a new pause timer value. This informs access terminal 20 to continue to monitor AGCH 21 for further instructions while network is activating and/or illuminating the dark beam.

In step 620, NGW 12 performs a global resource check with RM 16, via second interface 36 (step 622), to determine whether or not to illuminate the dark beam. The global resource check evaluates whether there are sufficient system wide resources , i.e., whether frequency and/or other resources are available to illuminate a dark beam. RM L6 searches for a frequency, in step 624, in the available resource pool, and, if successful, issues the required commands to perform satellite routing between NGW 12, satellite 6 and spot beam 10.

If the frequency resource has been found and the routing process is successful, RM 16 informs NGW 12 of the successful allocation via second interface 36, in step 626, as well as the ARFCNs for the five frequencies of the allocated subband. NGW 12 selects the lowest ARFCN as the frequency channel to use as the T-BCCH carrier. In step 628, NGW 12 begins broadcasting the system information messages on the new T-BCCH 11. The system information broadcast by NGW 12 on T-BCCH 11 contains a concurrent BCCH list which includes an entry for the ARFCN of the A-BCCH9 and the PLMN ID of EGW 8.

In step 630, another immediate assignment reject message 15 is generated by NGW 12 to EGW 8, with a reject cause switch to new BCCH and the ARFCN that will be used as the T-BCCH 11 carrier. NGW 12 includes the RACH 19 channel, which was used by access terminal 20 in the original request. In this way, EGW 8 can be memoryless and stateless in regards to the original channel request message. Also in step 630, NGW 12 informs EGW 12 via first interface 34, of the beam illumination, including the ARFCN of the T-BCCH carrier and the PLMN ID of NGW 12. EGW 12 acknowledges receipt of this message via first interface 34 in step 632. In step 634, EGW 8 updates the concurrent BCCH list in the system information message it broadcasts over the A-BCCH in spot beam 10 to include both the PLMN ID of the service provider associated with NGW 12 as well as the ARFCN of the T-BCCH carrier. The EGW 8 then simply retransmits the immediate assignment reject message it received from NGW 12 in step 630, on the AGCH corresponding to the original RACH, in step 636.

When access terminal 20 receives the relayed immediate assignment message from EGW 8 via the AGCH, it camps on the new T-BCCH 11 in step 638. It retunes to the T-BCCH 11 carrier indicated by ARFCN and reads the system information messages broadcast by NGW 12 on this channel. This system information contains the RACH parameters and other information, which is required by access terminal 20 to request services from NGW 12. In step 640, it transmits the same channel request message 13 to NGW 12 (via RACH 19) with the same establishment cause as in the channel request message 13 it first sent to EGW 8, in step 606. In step 642, NGW 12 responds to the channel request message from access terminal 20 with the appropriate immediate assignment message (via AGCH 21) and the process is complete. The access terminal 20 and the NGW 12 can now communicate on the assigned traffic channel in step 644. Note that after illumination of the T-BCCH 11, the steps are the same as the prior art shown in FIG. 2.

An embodiment of the present invention assumes GMR-1 as the prior art. This includes the assumption that the contents of certain referenced patents (6,249,677 and 6,233,451) are implemented. In fact, an embodiment of the present invention may be applied directly to a system using the GSM protocol as the prior art, without dependence on the aforementioned patents. For example, one embodiment of the present invention relies on the fact that the channel request message contains information, in addition to random reference and establishment cause, which may be used to trigger the dark beam illumination. In fact, the invention might be applied, by one skilled in the art, to GSM and further may trigger on additional information such as the SP/HPLMN ID, simply by having access terminal 20 transfer this information in a message subsequent to the channel request message. Thus step 606, (as described above) might actually require multiple steps. This only adds delay to the beam illumination, but does not prevent its usage. Further, the use concurrent beam list does not necessarily limit the present invention. In its absence, access terminal 20 must discover the dark beam illumination by continuous or periodic frequency scans for the appearance of T-BCCHs, since it cannot rely on the A-BCCH it is camped on, for this information.

Figure 6 illustrates the method for dark beam illumination as a direct response to a request from an access terminal 20. Alternatively, NGW 12 may decide to activate and illuminate a dark beam based on a time of day event or some other background task. For example, NGW 12 may have an algorithm whereby, it will decide not to illuminate a spot beam 10 based only on the request of one access terminal, but may decide to activate the spot beam based on the aggregate requests from several access terminals 20.

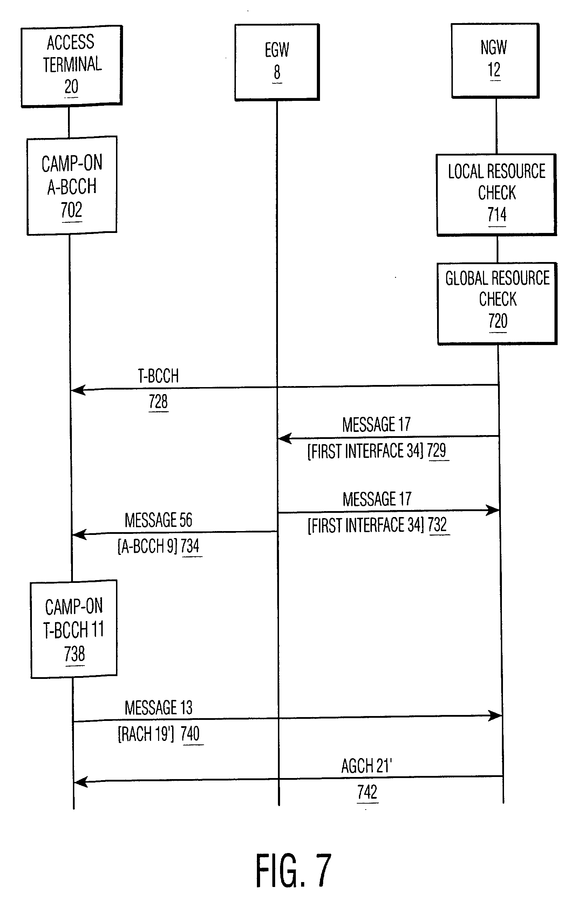

This process is shown in FIG. 7 and starts with NGW 12 performing the local resource check of step 714 (same as step 614) and the global resource check of step 720 (same as step 620). NGW 12 informs EGW 8 of the beam illumination in step 729 as per step 630 of Figure 6, including the ARFCN of the T-BCCH carrier and the PLMN ID of the service provider of NGW 12. Note that step 729 in FIG. 7 is different than step 630 in FIG. 6 because while the message transmitted in step 729 does contain the PLMN ID and the ARFCN of the T-BCCH 11, it does not contain an immediate assignment reject intended for access terminal 20. In step 734, EGW 8 updates the concurrent BCCH list in the system information message it broadcasts over the A-BCCH 9 in spot beam 10 to include both the PLMN ID of the service provider associated with NGW 12 as well as the ARFCN of the T-BCCH 11 carrier. In this case, there may be several access terminals 20 camped on the A-BCCH 9 of the EGW 8 in spot beam 10. These access terminals 20 will periodically read the system information broadcast by EGW 8 in A-BCCH 9 and discover the illumination of T-BCCH 11. They will then camp on the new T-BCCH 11 carrier in step 738. Any that may require access for packet service or for a mobility management function, will transmit channel request messages on a RACH 19 listed in the T-BCCH 11. This process is shown in Figure 7.

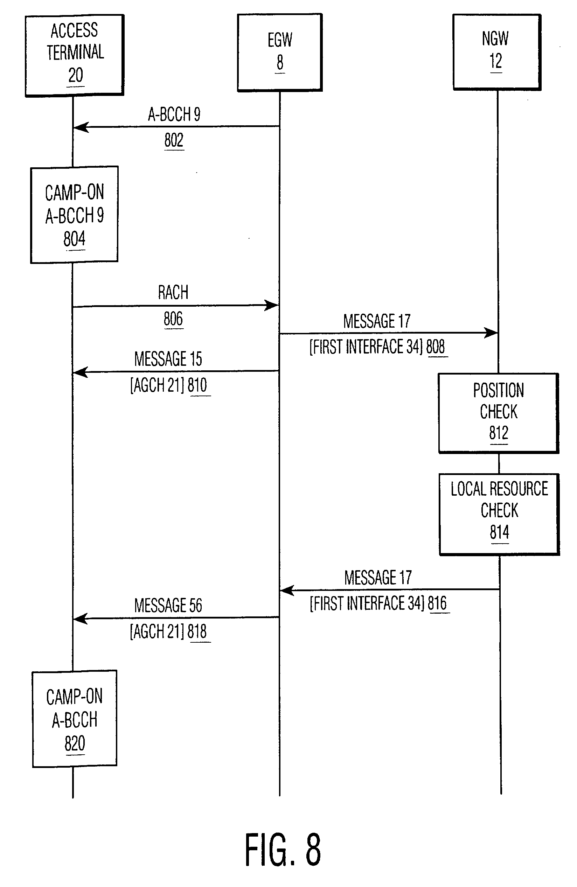

FIG. 8 is a signal flow diagram illustrating a method for rejecting a request to illuminate a dark beam according to another embodiment of the invention. In the event there is no resource to illuminate the dark beam, the request by access terminal 20 will be rejected by NGW 12, and the reject message will be passed to access terminal 20 through EGW 8. In the method of FIG. 8, steps 802, 804, 806, 808, 810 and 812 are identical to steps 602, 604, 606, 608, 610 and 612, of FIG. 6, and are omitted for clarity.

FIG. 8 illustrates the steps taken by the system according to an embodiment of the invention, when a dark beam cannot be illuminated, i.e., a "failure" to illuminate. In step 814, NGW 12 performs a local resource check, to test for the possibility-of illumination based on resource utilization. In this case, NGW 12 has found that adequate resources are not available and the requested beam cannot be activated or illuminated. As a result, NGW 12 responds to EGW 8 request by transmitting an immediate assignment reject message 15 in step 816, via first interface 34 with a reject cause indicating lack of resources.

In step 818 EGW 8 transmits Immediate Assignment Reject Message 15 via AGCH 21 to access terminal 20 with reject cause indicating lack of resources. The immediate assignment message also contains a wait timer value. This wait timer is interpreted as an illumination retry timer by the access terminal 20. In step 820, access terminal 20 remains camped on the A-BCCH 9 of EGW 8. Because its request to access new services has been denied, access terminal 20 starts the illumination retry timer and enters into the idle mode. Access terminal 20 will remain in idle mode and must not retransmit a channel request message on a RACH channel associated with A-BCCH 9, until the illumination retry timer has expired.

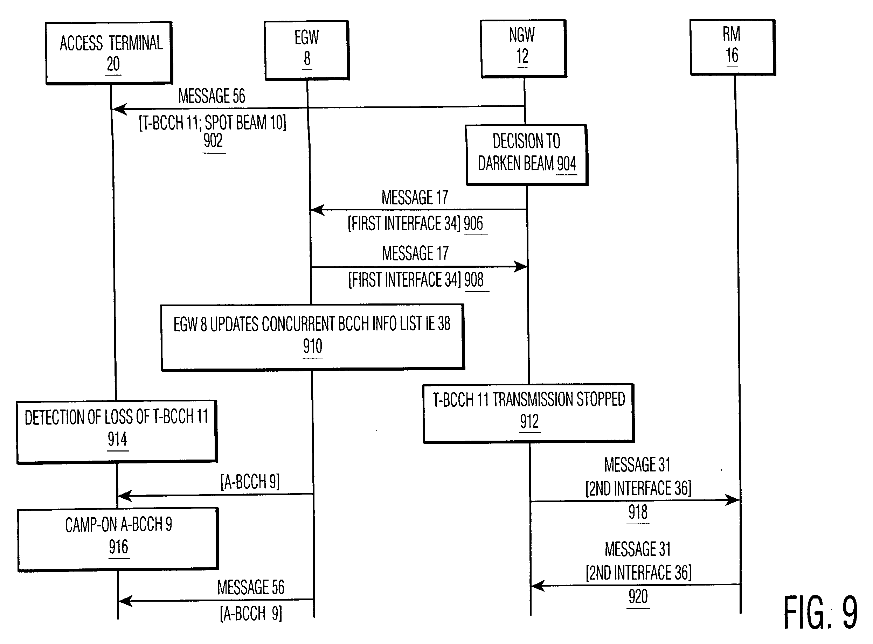

FIG. 9 is a signal flow diagram illustrating a method for darkening an illuminated beam according to a further embodiment invention. FIG. 9 illustrates a method for darkening an illuminated spot beam 10. In an illuminated beam, NGW 12 will constantly monitor traffic activities and make a decision to darken the beam based on certain criteria. Such criteria may include access terminal activity within the beam, current resource status, requests by other access terminals in other dark beams for service, lack of power resources, lack of users, expiration of an allowable illuminated time period, a reallocation of frequency resources, constraints of user accessibility, among other criteria. The beam darkening procedure begins with step 902. In step 902, access terminal 20, in an illuminated beam, is camped on T-BCCH 11. While camped out on T-BCCH 11, access terminal 20 receives system information contained in System Information Message 56 via T-BCCH 11.

In step 904, NGW 12 has decided to darken the illuminated beam. A separate process is used to make this decision, based on various inputs and criteria. U.S. Patent Application Serial No. 09/ , entitled "METHOD AND SYSTEM FOR GENERATING AND FILTERING METRICS TO PERFORM RESOURCE MANAGEMENT", M. Quinn, the entire contents of which are expressly incorporated herein by reference, describes an algorithm that decides whether to darken or illuminate a spot beam 10. These factors may include lack of power resources, lack of access terminals, expiration of an allowable illumination time period, a reallocation of frequency resources, and constraints of access terminal accessibility. Once a decision to darken an illuminated beam has been made, NGW 12 informs EGW 8, in step 906, of the beam darkening event by transmitting a "deactivation indication" message via first interface 34. This message includes the ARFCN of the T-BCCH carrier which is being darkened or deactivated, the spot beam ID of spot beam 10 and the PLMN ID of the service provider of NGW 12.

In step 908, EGW 8 acknowledges receipt of the "deactivation indication" by transmitting a "deactivation acknowledged" message via first interface 34. In step 910, EGW 8 updates the concurrent BCCH Info list by eliminating the entry for the ARFCN of the darkened T-BCCH 11 and the associated PLMN ID. In step 912, NGW 12 darkens the beam by stopping T-BCCH 11 transmission through satellite 6 and into spot beam 10.

After NGW 12 terminates transmission of T-BCCH 11, any access terminals 20 camping on the terminated T-BCCH 11 signal will detect its loss (step 914). Access terminal 20 camps on any A-BCCH 9 which was listed in the now defunct T-BCCH 11 concurrent BCCH List. This is shown as step 916. In step 916, access terminal 20 successfully camps on the previously identified A-BCCH 9 and decodes the appropriate system information.

In step 918, NGW 12 sends a message to RM 16, via second interface 36, indicating ARFCN 41 of the spot beam 10 to be released. In step 920, RM 16 informs NGW 12 of the successful frequency de-allocation via a message on interface 36. Thereafter, spot beam 10 is deactivated.

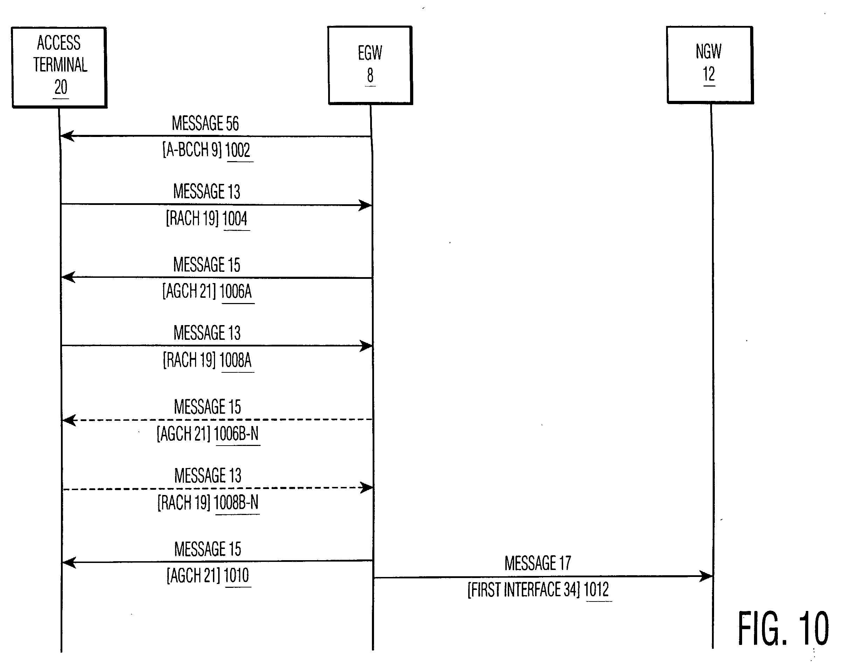

FIG. 10 is a signal flow diagram illustrating a method employed by an access terminal for repeatedly attempting to communicate with an existing gateway according to yet another embodiment of the invention. FIG. 10 illustrates the scenario when a RACH 19 transmission is only partially received at EGW 8, in an attempt to illuminate a dark beam. The method illustrated in FIG. 10 assumes that access terminal 20 is in a dark beam. While camped on an A-BCCH 9 broadcast from EGW 8, access terminal 20 receives system information message 56. This is shown as step 1002. In this scenario, the concurrent BCCH list does not include T-BCCH 11 of NGW 12.

Therefore, in step 1004, as with step 603 in Figure 6, access terminal 20 transmits a channel request message 13 on RACH 19 to EGW 8, with establishment cause containing either the packet service request value 43 or attach/routing area update request value 45. In this scenario, however, because of a fading or timing issue, EGW 8 incompletely or partially receives the channel request message 13 transmission on RACH 19.

In step 1006A, EGW 8 provides access terminal 20 with timing and frequency correction factors by transmitting an immediate assignment reject message 15, with a reject cause value of incorrect class-2 RACH info, and with a pause timer value set equal to zero (0). In step 1008A, access terminal 20 receives the immediate assignment reject message 15 transmitted by EGW 8, adjusts its transmit timing by an amount equal to the timing correction factor and adjusts its transmit frequency by an amount indicated by the frequency correction factor and immediately transmits a second channel request message 13 on RACH 19. Access terminal 20 counts the number of RACH 19 retransmissions, indicated by steps 1008B-N, and prevents any further transmissions if the maximum number of allowable RACH re-transmissions is reached. The maximum allowable number of RACH retransmissions is a parameter broadcast in the system information on the BCCH.

Steps 1006B-N indicate the retransmissions of Immediate Assignment Reject Messages 15 by EGW 8 to access terminal 20. "N" indicates the total maximum allowable number of RACH 19 transmission attempts, less one, to account for the RACH 19 transmission that occurred in step 1004. In other words, each time access terminal 20 attempts a transmission of Channel Request Message 13 on RACH 19, and it fails, EGW 8 will transmit Immediate Assignment Reject Message 15, until the RACH 19 has-been successfully received (or access terminal 20 reaches its maxim allowable number of retransmission attempts).

In step 1010, EGW 8 has successfully received a RACH 19 retransmission from access terminal 20 (note that this could have been the first re-transmission, or the maximum allowable transmission attempt), and if a complete RACH message is correctly received by EGW 8, the method illustrated in FIG. 6 is followed, beginning with step 608, shown by step 1012 in FIG. 10, and so on.

The present invention has been described with reference to certain exemplary embodiments thereof. However, it will be readily apparent to those skilled in the art that it is possible to embody the invention in specific forms other than those described of the exemplary embodiments described above. This may be done without departing from the spirit of the invention. The exemplary embodiments are merely illustrative and should not be considered restrictive in any way. The scope of the invention is defined by the appended claims and their equivalents, rather than by the preceding description.

## Claims

1. A method of enabling communication between a access terminal of an existing gateway and a new gateway, comprising the following steps:
deciding to illuminate a dark beam;
determining whether the access terminal can be serviced by the new gateway;
providing resources from an existing resource provider if the access terminal can be serviced by the new gateway, or denying resources from the existing resource provider if the access terminal cannot be serviced by the new gateway; and
providing the new service from the new gateway to the access terminal when the resources have been provided by the existing gateway.

2. The method according to claim 1, wherein the step of deciding to illuminate a dark beam comprises:
recognizing a dark beam illumination triggering event.

3. The method according to claim 2, wherein the step of recognizing a dark beam illumination triggering event comprises:
receiving a request from the access terminal by an existing gateway;
transmitting a response from the existing gateway to the access terminal; and
transmitting the request from the existing gateway to the new gateway.

4. The method according to claim 3, wherein the step of receiving a request from the access terminal by an existing gateway comprises:
receiving a channel request message from the access terminal by an existing gateway.

5. The method according to claim 4, wherein the step of receiving a channel request message from the access terminal by an existing gateway further comprises:
receiving the channel request message on a random access channel.

6. The method according to claim 3, wherein the step of transmitting a response from the existing gateway to the access terminal comprises:
transmitting an immediate assignment reject message from the existing gateway to the access terminal.

7. The method according to claim 6, wherein the step of transmitting an immediate assignment reject message from the existing gateway to the access terminal further comprises:
the immediate assignment reject message comprising a pause timer value.

8. The method according to claim 7, wherein the step of transmitting an immediate assignment reject message from the existing gateway to the access terminal further comprises:
transmitting an immediate assignment reject message on an access grant channel.

9. The method according to claim 3, wherein the step of transmitting the request from the existing gateway to the new gateway comprises:
forwarding a channel request message from the existing gateway to the new gateway.

10. The method according to claim 9, wherein the step of forwarding a channel request message from the existing gateway to the new gateway further comprises:
transmitting a channel request message on a first interface between the existing gateway and the new gateway.
